# FASCICULE DE BREVET EUROPEEN

(11) **EP 3 612 591 B1**
(45) Date de publication et mention de la délivrance du brevet: **09.06.2021**
(21) Numéro de dépôt: 18720343.5
(22) Date de dépôt: 17.04.2018
(51) Int. Cl.: C08L 79/02

(54) **COMPOSITION ÉMULSIFIANTE DE RÉPANDAGE POUR LE BITUME**
EMULGATORZUSAMMENSETZUNG ZUM AUFBRINGEN FÜR BITUMEN
APPLICATION EMULGATOR COMPOSITION FOR BITUMEN

(30) Priorité: 21.04.2017 FR 1753498
(43) Date de publication de la demande: 26.02.2020
(73) Titulaire: Arkema France, 92700 Colombes (FR)
(72) Inventeur: JORDA, Eric, 69005 Lyon (FR)
(86) Numéro de dépôt international: PCT/FR2018/050968
(87) Numéro de publication internationale: WO 2018/193206

(56) Documents cités:
- WO-A1-2016/005591
- WO-A2-2014/154985
- FR-A1- 2 930 253
- FR-A1- 2 971 511

## Description

L'invention porte sur une composition aqueuse acide émulsifiante comprenant une amine particulière et un acide gras polymérisé, sur un procédé de préparation de ladite composition, sur un procédé de préparation d'émulsion bitumineuse et sur l'utilisation de ladite composition pour le répandage de bitume.

Dans le cadre de la présente invention, on entend par bitume, produits ou liants bitumineux ou plus simplement liant, le bitume naturel, les bitumes issus d'une huile minérale et les mélanges qui en résultent. Les bitumes obtenus par craquage et les goudrons sont aussi ici considérés comme produits bitumineux au sens de la présente invention, ainsi que les mélanges qui peuvent en résulter.

Les résidus de distillation sous vide, de distillation, de précipitation (comme par exemple au propane), les bitumes soufflés sont des exemples considérés dans le cadre de cette invention.

On considère également les liants routiers synthétiques ou d'origine végétale contenant des résines naturelles modifiées ou non en mélange avec des huiles d'origine végétale ou leurs dérivés. Certains bitumes synthétiques sont également appelés parfois bitumes clairs, pigmentables ou colorables. Ces bitumes contiennent peu ou pas d'asphaltènes et peuvent être par conséquent colorés. Ces bitumes sont à base de résine de pétrole et/ou de résine indène-coumarone et d'huile lubrifiante comme décrit par exemple dans le document EP179510.

On considère également ici les bitumes dilués à l'aide de solvants pétroliers, les bitumes dilués à l'aide d'huiles végétales, ainsi que les émulsions de bitume.

Enfin, on considère aussi les bitumes modifiés par des polymères. Comme polymère, on peut citer par exemple, et de manière indicative et non limitative, les élastomères thermoplastiques comme les copolymères statistiques ou séquences de styrène et de butadiène, linéaire ou en étoile (SBR, SBS) ou de styrène et d'isoprène (SIS), éventuellement réticulés, les copolymères d'éthylène et d'acétate de vinyle, les homopolymères et copolymères oléfiniques d'éthylène (ou propylène, ou butylène), les polyisobutylènes, les polybutadiènes, les polyisoprènes, les poly(chlorure de vinyle), les poudrettes de caoutchouc ou encore tout polymère utilisé pour la modification des bitumes ainsi que leurs mélanges. On utilise en général une quantité de polymère de 2 à 10% en poids par rapport au poids de bitume.

De tels produits ou liants bitumineux peuvent être utilisés tels quels par exemple pour leur utilisation comme enduits d'étanchéité pour les toits ou couches d'accrochage routière. Alternativement, ils peuvent être mélangés à des matières minérales par exemple sous la forme de granulats, tels que sable, gravillons, etc...

Ainsi, dans le milieu de l'industrie routière, on distingue plusieurs techniques de préparation de matériaux routiers bitumineux :
- les techniques dites à froid, sont basées sur l'utilisation d'émulsions de bitume comme liant. Le bitume est alors dispersé en phase aqueuse par action mécanique en présence de tensioactifs. Ces techniques permettent d'utiliser le liant et les granulats à des températures inférieures à 100°C et le plus souvent à température ambiante ;
- les techniques dites à chaud utilisent un liant anhydre. Le liant est rendu ou maintenu fluide par chauffage à plus de 100°C généralement. Parmi ces techniques, il en existe pour lesquelles les granulats utilisés sont chauffés et séchés à haute température avant contact avec le liant. Un enrobage peut avoir lieu à une température aux alentours de 140°C ou plus selon les caractéristiques du liant, auquel cas on parle d'enrobés à chaud. Dans les techniques au liant anhydre on peut citer aussi les enduits au bitume fluidifié ou fluxé, où le bitume est rendu fluide par l'ajout d'un « diluant » éventuellement siccatif ;
- les techniques dites tièdes, qui permettent de réaliser les opérations décrites ci-dessus à des températures inférieures à celles utilisées pour les techniques à chaud pour obtenir des enrobés tièdes. Là aussi on peut distinguer les techniques employant des températures supérieures à 100°C et celles employant des températures inférieures à 100°C, c'est à dire pour lesquelles un apport d'énergie thermique pour la production du matériau routier est nécessaire tout en permettant la présence d'eau liquide dans une des étapes du procédé ;
- les techniques utilisant des polymères, qui peuvent être ajoutés au bitume de manière à obtenir des produits bitumineux avec des propriétés mécaniques améliorées. Ces produits bitumineux modifiés par des polymères sont utilisés en construction routière, urbaine, aéroportuaire ainsi que pour l'étanchéité en utilisant par exemple les techniques mentionnées ci-dessus. Les polymères sont de grandes molécules formées par liaisons chimiques covalentes entre plusieurs unités répétées ou monomères. La modification des bitumes avec des polymères de fortes masses molaires (au moins 10 000 g/mol) est généralement nécessaire pour améliorer les propriétés mécaniques du produit bitumineux. La modification des bitumes par les polymères permet d'augmenter la souplesse à basse température et d'augmenter le point de ramollissement à haute température. Cela permet également d'augmenter la cohésion et le module du bitume ainsi que ceux des matériaux routiers, augmentant ainsi la résistance à l'orniérage ou l'arrachement de granulats par exemple.

Quelle que soit la technique utilisée parmi les différentes techniques décrites ci-dessus, il est généralement utile d'associer la composition bitumineuse à un additif choisi en fonction de l'application souhaitée.

Ainsi, dans les techniques utilisant des émulsions de bitume, on distingue principalement deux types d'application :
- les techniques d'enrobage, dont on peut citer pour exemple parmi les plus utilisés les « graves émulsions », les « enrobés coulés à froid » (ECF), les « enrobés denses à froid »,
- les techniques de répandage avec principalement les « enduits superficiels » et les « couches d'accrochage ».

Il est connu que pour faire une bonne émulsion de répandage, il faut une émulsion à rupture rapide afin qu'elle se déstabilise très rapidement après pulvérisation. Il faut aussi une émulsion stable au stockage pour éviter la rupture dans les cuves ou les camions et avec une bonne adhésivité sur tous types de granulat et support.

En règle générale, les émulsions qui répondent à ces critères sont des émulsions cationiques utilisées à pH inférieur à 7 et qui donnent une bonne adhésivité sur la majeure partie des granulats disponibles. Les émulsifiants généralement utilisés pour ces techniques de répandage sont donc des tensioactifs cationiques de type polyamines, amidoamines et imidazolines sur chaînes grasses (12 à 22 atomes de carbone) salifiés par des acides forts et plus généralement l'acide chlorhydrique.

L'invention a pour but de proposer une composition émulsifiante de répandage présentant un mûrissement amélioré tout en gardant une bonne stabilité. Cette stabilité est d'autant plus problématique que les dosages en émulsifiant pour ce type d'émulsion sont bas et que la qualité des bitumes à émulsifier diminue. Il y a aussi de plus en plus de demande pour des émulsions de répandage de spécialité avec des bitumes durs (35/50 de pénétrabilité et moins, mesurée selon la NF EN 1426 de Juin 2007) ou des bitumes modifiés au polymère (SBS, EVA, Elvaloy, poudrette de caoutchouc...). Ces émulsions sont très difficiles à stabiliser. Par ailleurs, souvent lorsqu'elles sont stables au stockage, elles sont alors lentes à se déstabiliser au répandage.

Il y a donc un réel besoin pour des émulsions de répandage stables au stockage, mais qui se déstabilisent rapidement après pulvérisation. Par ailleurs, ces émulsions doivent être adaptées à des bitumes complexes, c'est-à-dire de mauvaise qualité, de viscosité élevée, ou encore modifiés au polymère.

Le problème de la stabilité au stockage des émulsions de bitume a déjà été traité par le passé et l'homme du métier sait résoudre ce problème par l'usage d'un dosage adapté d'émulsifiants de type polyamines, amidoamines et imidazolines sur chaînes grasses (12 à 22 atomes de carbone) salifiés par des acides forts et plus généralement l'acide chlorhydrique. Plus l'émulsion de bitume est compliquée à réaliser et à stabiliser et plus le dosage d'émulsifiant doit être augmenté.

De même, l'homme du métier sait améliorer la vitesse de déstabilisation d'une émulsion par l'usage d'un dosage adapté d'émulsifiant de type polyamines, amidoamines et imidazolines sur chaînes grasses (12 à 22 atomes de carbone) salifiés par des acides forts et plus généralement l'acide chlorhydrique. Plus l'émulsion doit se déstabiliser rapidement à l'usage et plus le dosage d'émulsifiant doit être faible.

On voit donc que l'utilisation du paramètre de dosage connu de l'homme du métier n'est pas utilisable pour les cas où l'émulsion de bitume est compliquée à réaliser et à stabiliser, mais doit se déstabiliser rapidement après pulvérisation sur la chaussée, comme c'est le cas par exemple pour les émulsions d'enduit superficiel avec des bitumes fortement modifiés au SBS.

Le document EP0416682 (SHELL Internationale Research Maatschappij) propose une amélioration du comportement à la rupture des émulsions de bitume par l'utilisation de compositions bitumineuses comprenant des acides gras polymériques. Ce document divulgue l'utilisation de ces acides spécifiques pour améliorer les propriétés des bitumes. Ce document enseigne l'ajout d'acides particuliers dans le bitume pour en modifier les propriétés.

Or, cette solution qui consiste à modifier le bitume peut être adaptée pour un fabricant de bitume, mais est particulièrement complexe pour les fabricants d'émulsion, qui ne disposent pas d'équipement pour additiver le bitume (cuve de stockage spécifique très coûteuse et ligne d'alimentation dédiée avec pompe doseuse).

Ainsi, il n'existe à l'heure actuelle aucune solution technique conduisant à la fois, à l'obtention de compositions émulsifiantes de répandage pour bitumes présentant une stabilité au stockage améliorée, et présentant une vitesse de rupture améliorée qui soit utilisable directement et facilement par les fabricants d'émulsion, sans coût d'équipement important ou sans recours à un bitume particulier.

L'invention a pour objet une composition aqueuse acide émulsifiante comprenant :
**A)** de 0.01 à 20% en poids par rapport au poids total de la composition aqueuse d'au moins une amine choisie parmi les amines de formules suivantes :
   **i)** une monoamine grasse, éventuellement alcoxylée de formule (I) suivante : 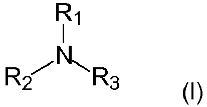 dans laquelle :
      - R₁ représente une chaîne carbonée, saturée ou insaturée, linéaire ou ramifiée, comportant 8 à 24 atomes de carbone, préférentiellement 12 à 24 atomes de carbone et encore plus préférentiellement 12 à 18 atomes de carbone,
      - R₂ et R₃, identiques ou différents, représentent l'atome d'hydrogène, un radical alkyle, linéaire ou ramifié, saturé ou insaturé, comportant 1 à 4 atomes de carbone, ou un groupe -(CH₂CHR₄O)ₕH, avec R₄ représentant un atome d'hydrogène, un radical méthyle ou éthyle, et h étant un nombre entier allant de 1 à 10, préférentiellement de 1 à 3 et encore plus préférentiellement de 1 à 2 ; étant entendu que si h > 1, il existe plusieurs groupes R₄ tels que définis précédemment et qui peuvent être identiques ou différents,
   **ii)** une polyamine grasse, éventuellement alcoxylée de formule (II) suivante : 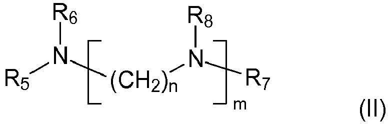 dans laquelle :
      - R₅ représente une chaîne carbonée, saturée ou insaturée, linéaire ou ramifiée, comportant 8 à 24 atomes de carbone, préférentiellement 12 à 24 atomes de carbone et encore plus préférentiellement 12 à 18 atomes de carbone,
      - R₆, R₇ et R₈, identiques ou différents, représentent l'atome d'hydrogène, un radical alkyle, linéaire ou ramifié, saturé ou insaturé, comportant 1 à 4 atomes de carbone, ou un groupe -(CH₂CHR₉O)ᵢH, avec
      - R₉ représentant un atome d'hydrogène, un radical méthyle ou éthyle, et
      - i désignant un nombre entier allant de 1 à 10, préférentiellement de 1 à 3 et encore plus préférentiellement de 1 à 2 ;
      - étant entendu que si i > 1, il existe plusieurs groupes Rg tels que définis précédemment et qui peuvent être identiques ou différents,
      - m désigne un nombre entier entre 1 et 6, préférentiellement entre 1 et 4 et plus préférentiellement 1 ou 2, étant entendu que si m > 1, il existe plusieurs groupes R₈ tels que définis précédemment et qui peuvent être identiques ou différents,
      - n désigne un nombre entier entre 1 et 6, préférentiellement entre 2 et 4 et encore plus préférentiellement 2 ou 3,
   iii) une amidoamine grasse, éventuellement alcoxylée, de formule (IIIa) suivante ou son équivalent cyclisé, éventuellement alcoxylé, de formule (IIIb) suivante : 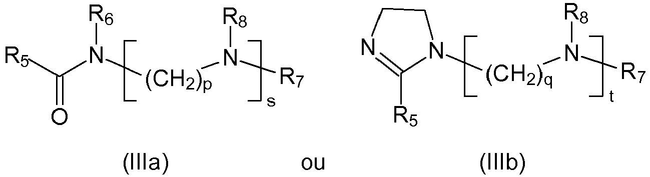 dans lesquelles :
      - les groupes R₅, R₆, R₇ et R₈ ont la même signification que dans la formule (II),
      - p et q désignent un nombre entier entre 1 et 6, préférentiellement entre 1 et 4 et plus préférentiellement 2,
      - s désigne un nombre entier entre 1 et 10, préférentiellement entre 1 et 4 et encore plus préférentiellement 1, 2 ou 3,
      - t désigne un nombre entier entre 0 et 9, préférentiellement entre 0 et 3 et encore plus préférentiellement 0, 1 ou 2,
      - étant entendu que si s > 1 ou t > 1, il existe plusieurs groupes R₈ tels que définis précédemment et qui peuvent être identiques ou différents,
**B)** de 0,001% à 10% en poids par rapport au poids total de la composition aqueuse d'au moins un acide gras polymérisé présentant une masse molaire supérieure à 350 g.mol⁻¹ et un indice d'acidité supérieur à 160 mg KOH.g⁻¹, selon la norme ASTM D465 de 2005,
**C)** moins de 20% en poids par rapport au poids total de la composition aqueuse d'au moins un bitume, et
**D)** une teneur en eau strictement supérieure à 5% en poids par rapport au poids total de la composition aqueuse.

Lorsque cette composition est utilisée pour la préparation des émulsions bitumineuses, la vitesse de rupture obtenue est beaucoup plus élevée. Cette composition présente l'avantage d'être extrêmement facile à mettre en oeuvre. Par ailleurs, elle peut être fabriquée à partir d'équipements déjà existants sur le plan industriel. En effet, en utilisant cette composition, il est inutile d'additiver le bitume. La composition selon l'invention peut être directement utilisée sur du bitume non additivé.

L'invention a également pour objet le procédé de préparation de la composition selon l'invention. L'invention a également pour objet le procédé de préparation d'émulsion bitumineuse à partir de la composition selon l'invention.

L'invention porte aussi sur l'utilisation de la composition selon l'invention pour la préparation d'émulsion bitumineuse pour répandage, et notamment d'émulsion stable. L'invention a aussi pour objet la composition anhydre, précurseur de la composition aqueuse définie ci-dessus. L'invention a également pour objet le procédé de préparation de la composition anhydre. L'invention a également pour objet le procédé de préparation de la composition selon l'invention à partir de la composition anhydre.

L'invention a également pour objet le procédé de préparation d'émulsion bitumineuse à partir de la composition anhydre. L'invention porte aussi sur l'utilisation de la composition anhydre pour la préparation de la composition selon l'invention. L'invention porte aussi sur l'utilisation de la composition anhydre pour la préparation d'émulsion bitumineuse pour répandage, et notamment d'émulsion stable.

On entend par émulsion dans la présente invention un système hétérogène à deux ou plusieurs phases liquides, constitué par une phase liquide continue et au moins une deuxième phase liquide, dispersée dans la première, sous forme de fines gouttelettes.

Il est précisé que les expressions « de... à... » et « compris entre ... et ... » utilisées dans la présente description doivent s'entendre comme incluant chacune des bornes mentionnées.

### Composition aqueuse acide émulsifiante

### Amines grasses

La composition selon l'invention comprend au moins une amine choisie parmi les amines de formules suivantes :
i) une monoamine grasse, éventuellement alcoxylée de formule (I) suivante : 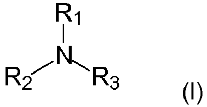 dans laquelle :
   - R₁ représente une chaîne carbonée, saturée ou insaturée, linéaire ou ramifiée, comportant 8 à 24 atomes de carbone, préférentiellement 12 à 24 atomes de carbone et encore plus préférentiellement 12 à 18 atomes de carbone,
   - R₂ et R₃, identiques ou différents, représentent l'atome d'hydrogène, un radical alkyle, linéaire ou ramifié, saturé ou insaturé, comportant 1 à 4 atomes de carbone, ou un groupe -(CH₂CHR₄O)ₕH, avec R₄ représentant un atome d'hydrogène, un radical méthyle ou éthyle, et h étant un nombre entier allant de 1 à 10, préférentiellement de 1 à 3 et encore plus préférentiellement de 1 à 2 ; il est entendu que si h > 1, il existe plusieurs groupes R₄ tels que définis précédemment et qui peuvent être identiques ou différents.

De telles amines sont par exemple l'octylamine, la nonylamine, la décylamine, la undécylamine, la dodécylamine, la tétradécylamine, l'hexadécylamine, l'octadécylamine, la myristoléylamine, la palmitoléylamine, l'oléylamine et les amines grasses issues de mélanges d'acide gras d'origine animale ou végétale comme les amines grasses de coco, de palme, d'oléine ou de suif. De tels produits sont disponibles par exemple auprès de la Société ARKEMA sous l'appellation générique Noram®.

Les dérivés alkylés de ces amines obtenus par les procédés connus de l'homme du métier font aussi partie de cette invention. On citera, à titre non limitatif, la myristyl-diméthylamine, la lauryldiméthylamine, l'oléyldiméthylamine, la stéaryldiméthylamine, la diméthylamine de suif, la diméthylamine de coco ou la diméthylamine de palme ainsi que les dérivés diéthylés ou dipropylés correspondants et leurs mélanges.

Les dérivés alcoxylés de ces amines obtenus par les procédés connus de l'homme du métier font aussi partie de cette invention. On citera à titre non limitatif les amines grasses éthoxylées de suif, de coco, de palme, d'oléine ainsi que les dérivés propoxylés et butoxylés et leurs mélanges. De tels produits sont disponibles par exemple auprès de la Société ARKEMA sous l'appellation générique Noramox®.
**ii)** une polyamine grasse, éventuellement alcoxylée de formule (II) suivante : 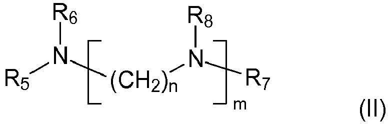 dans laquelle :
- R₅ représente une chaîne carbonée, saturée ou insaturée, linéaire ou ramifiée, comportant 8 à 24 atomes de carbone, préférentiellement 12 à 24 atomes de carbone et encore plus préférentiellement 12 à 18 atomes de carbone,
- R₆, R₇ et R₈, identiques ou différents, représentent l'atome d'hydrogène, un radical alkyle, linéaire ou ramifié, saturé ou insaturé, comportant 1 à 4 atomes de carbone, ou un groupe -(CH₂CHR₉O)ᵢH, avec
- R₉ représentant un atome d'hydrogène, un radical méthyle ou éthyle, et
- i désignant un nombre entier allant de 1 à 10, préférentiellement de 1 à 3 et encore plus préférentiellement de 1 à 2 ;
- étant entendu que si i > 1, il existe plusieurs groupes Rg tels que définis précédemment et qui peuvent être identiques ou différents
- m désigne un nombre entier entre 1 et 6, préférentiellement entre 1 et 4 et plus préférentiellement 1 ou 2, il est entendu que si m > 1, il existe plusieurs groupes R₈ tels que définis précédemment et qui peuvent être identiques ou différents,
- n désigne un nombre entier entre 1 et 6, préférentiellement entre 2 et 4 et encore plus préférentiellement 2 ou 3.

De telles amines sont par exemple la N-coco-propylène diamine (CAS n°61791-63-7), N-stéarylpropylène diamine, la N-oléylpropylène diamine (CAS n°7173-62-8), la N-suif-propylène diamine (CAS n°61791-55-7), la N-soja-propylène diamine (CAS n°61791-67-1), la N-coco-dipropylène triamine, la N-oléyldipropylène triamine (CAS n°28872-01-7), la N-suif-propylène triamine (CAS n°61791-57-9) et la N-suif-tripropylènetétramine (CAS n° 68911-79-5). De tels produits sont disponibles par exemple auprès de la Société ARKEMA sous les appellations génériques Dinoram®, Trinoram® et Polyram®.

Les dérivés alkylés de ces polyamines obtenus par les procédés connus de l'homme du métier font aussi partie de cette invention. On citera par exemple la N,N,N'-triméthyl-N'-suif-propylène diamine (CAS n°68783-25-5) disponible par exemple auprès de la Société Akzo sous l'appellation commerciale Duomeen® TTM ainsi que les dérivés diéthylés ou dipropylés correspondants, et leurs mélanges.

Les dérivés alcoxylés de ces polyamines obtenus par les procédés connus de l'homme du métier font aussi partie de cette invention. On citera à titre non limitatif les polyamines grasses éthoxylées de suif, de coco, de palme, d'oléine ainsi que les dérivés propoxylés et butoxylés et leurs mélanges. De tels produits sont disponibles par exemple auprès de la Société ARKEMA sous l'appellation générique Dinoramox®.
**iii)** une amidoamine grasse de formule (IIIa) suivante, éventuellement alcoxylé ou son équivalent cyclisé de formule (IIIb) suivante, éventuellement alcoxylé : 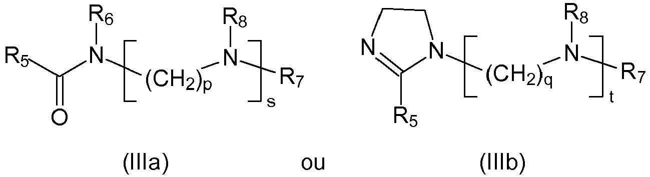 dans laquelle :
- les groupes R₅, R₆, R₇ et R₈ ont la même signification que dans la formule (II),
- p et q désignent un nombre entier entre 1 et 6, préférentiellement entre 1 et 4 et plus préférentiellement 2,
- s désigne un nombre entier entre 1 et 10, préférentiellement entre 1 et 4 et encore plus préférentiellement 1, 2 ou 3,
- t désigne un nombre entier entre 0 et 9, préférentiellement entre 0 et 3 et encore plus préférentiellement 0, 1 ou 2,
- il est entendu que si s > 1 ou t > 1, il existe plusieurs groupes R₈ tels que définis précédemment et qui peuvent être identiques ou différents.

De tels produits, isolés ou en mélange de deux ou plusieurs d'entre eux, sont soit connus et disponibles dans le commerce, soit facilement préparés à partir de modes opératoires connus de l'homme du métier, et par exemple par réaction entre :
- des huiles végétales ou animales (typiquement des triglycérides) ou des acides gras de différentes natures, comme les acides gras de coco, de suif, de palme, de pin (ou tall-oil), les acides octanoïque, nonanoïque, décanoïque, undécanoïque, dodécanoïque, laurique, myristique, cétylique, stéarique, oléïque, arachidique, béhénique et
- des polyéthylènes polyamines telles que la diéthylène triamine (DETA), la triéthylènetétramine (TETA), la tétraéthylènepentamine (TEPA), l'aminoéthyl pipérazine (AEP) et la pentaéthylènehexamine (PEHA).

D'autres polyaminoalkylamines, telles que la diméthylaminopropylamine (DMAPA) ou la diméthylaminopropylaminopropylamine (DMAPAPA) peuvent également être utilisées pour la réaction avec lesdits acides gras.

Les dérivés cyclisés de formule (IIIb) sont généralement obtenus par cyclisation interne (déshydratation thermique) des composés correspondants de formule (IIIa).

Le composant iii) est généralement composé d'un mélange entre le composé non cyclique de formule (IIIa) et de son homologue cyclisé de formule (IIIb).

De tels produits sont par exemple les émulsifiants commerciaux comme l'Emulsamine® L60, l'Emulsamine® L70, l'Emulsamine® LZ, l'Emulsamine® L85, le Polyram® L930 et le Polyram® L920 commercialisés par la société ARKEMA.

Ces amines, une fois introduites dans la composition aqueuse acide selon l'invention se présentent généralement sous forme cationique.

Selon un mode de réalisation préféré de l'invention, la composition comprend de 0.01% à 20% en poids d'au moins une amine de formule (I), et/ou (II) et/ou (IIIa) et/ou (IIIb) définie ci-dessus, plus préférentiellement de 0,05% à 10% en poids, encore plus préférentiellement de 0,1% à 3% en poids et encore plus préférentiellement de 0,2% à 1% en poids par rapport au poids total de la composition aqueuse.

### Acides gras

La composition selon l'invention comprend au moins un acide gras polymérisé. Les acides gras polymérisés sont bien connus de l'homme du métier et peuvent être par exemple obtenus par polymérisation d'au moins un acide gras insaturé.

Les acides gras insaturés permettant d'obtenir les acides gras polymérisés, sont généralement et le plus souvent des acides gras insaturés de 4 à 24 atomes de carbones (C4 à C24), de préférence de 11 à 22 atomes de carbones (C11 à C22), de préférence de 16 à 18 atomes de carbones (C16 à C18).

Parmi les acides gras insaturés permettant d'obtenir les acides gras polymérisés, on peut citer par exemple, l'acide crotonique (C4), l'acide iso-crotonique (C4), l'acide undécylénique (C11), l'acide hypogéïque (C16), l'acide palmitoléïque (C16), l'acide oléique (C18), l'acide élaïdique (C18), l'acide vaccénique (C18), l'acide pétrosélinique (C18), l'acide gadoléique (C20), l'acide gondoïque (C20), l'acide cétoléique (C22), l'acide érucidique (C22), l'acide brassidique (C22), l'acide nervonique (C24), l'acide tiglique (C5), l'acide sorbique (C6), l'acide linoléique (C18), l'acide hiragonique (C16), l'acide linolénique (C18), l'acide γ-linolénique (C18), l'acide éléostéarique (C18), l'acide parinarique (C18), homo-γ-linolénique (C20), l'acide arachidonique (C20), l'acide clupanodonique (C22) pris seuls ou en mélanges.

De préférence, les acides gras insaturés sont des acides gras insaturés de 18 atomes de carbones, en particulier choisis parmi l'acide oléique, l'acide linoléique, l'acide linolénique pris seuls ou en mélange. On peut aussi polymériser les mélanges d'acides d'origine naturelle comme ceux provenant du TOFA ou « Tall Oil Fatty Acid » (riche en acides oléiques et acides linoléiques). Il est possible de polymériser un acide gras ou un mélange contenant plusieurs acides gras différents. La réaction permettant de polymériser les chaînes des acides gras est par exemple une réaction de Diels-Alder (pour plus d'informations voir « Kirk Othmer Encyclopedia of Chemical Technology », Vol. 7, p. 768 ou « The dimer acids », Humko Sheffield, (1975)).

La réaction de polymérisation est une réaction de dimérisation, trimérisation ou tétramérisation conduisant respectivement aux dimères d'acides gras (ou dimères diacides), trimères d'acides gras (ou trimères triacides) ou tétramères d'acides gras (ou tétramères tétracides). Des traces d'acides gras n'ayant pas réagi peuvent aussi être présentes (ou monomères d'acides gras).

Suivant les conditions expérimentales utilisées, on obtient donc des acides gras polymérisés, comprenant des acides gras qui n'ont pas réagi (monomères d'acides gras), des dimères d'acides gras, des trimères d'acides gras et des tétramères d'acides en diverses proportions. Les acides gras polymérisés comprennent majoritairement des dimères d'acides gras et des trimères d'acides gras. Les acides gras n'ayant pas réagi (monomères d'acides gras) ou les tétramères d'acides gras étant des produits minoritaires.

De préférence, les acides gras polymérisés comprennent au moins 20% en poids de dimères d'acides gras. Plus préférentiellement, les acides gras polymérisés comprennent au moins 75% en poids de dimères d'acides gras. Parmi les acides gras polymérisés disponibles commercialement, on peut citer les PRIPOL® commercialisés par Uniqema, les Polymergin® commercialisés par Harburger Brinckman & Mergell GmbH, les Dimer® commercialisés par Westvaco, les Empol® commercialisés par Cognis.

Par exemple, l'Empol® 1008 comprend 3,5% en poids d'acide gras en C18 n'ayant pas réagi, 92.3% en poids de dimère d'acide gras en C36 et 3,5% en poids de trimère d'acide gras en C54.

Par exemple, l'Empol® 1018 comprend 4% en poids d'acide gras n'ayant pas réagi, 79% en poids de dimère d'acide gras et 17% en poids de trimère d'acide gras.

Par exemple, l'Empol® 1040 comprend 20% en poids de dimère d'acide gras en C36 et 80% en poids de trimère d'acide gras en C54.

Par exemple, l'Empol® 1041 comprend 10% en poids de dimère d'acide gras en C36 et 90% en poids de trimère d'acide gras en C54.

Par exemple, l'Empol® 1054 comprend 4% en poids d'acide gras en C18 n'ayant pas réagi, 55% en poids de dimère d'acide gras en C36 et 35% en poids de trimère d'acide gras en C54.

Par exemple, le Pripol® 1045 comprend 10% en poids de dimère d'acide gras en C36 et 90% en poids de trimère d'acide gras en C54.

Par exemple, le Pripol® 1040 comprend 0,1% en poids de monomère d'acide gras, 22,5% en poids de dimère d'acide gras et 77% en poids de trimère d'acide gras.

Par exemple, le Pripol® 1017 comprend 2% en poids de monomère d'acide gras, 79% en poids de dimère d'acide gras et 19% en poids de trimère d'acide gras.

Par exemple, le Pripol® 1012 comprend 0,1% en poids de monomère d'acide gras, 97% en poids de dimère d'acide gras et 1,1% en poids de trimère d'acide gras.

Par exemple, le Pripol® 1013 comprend environ 0,1% en poids de monomère d'acide gras, 97% en poids de dimère d'acide gras et 3% en poids de trimère d'acide gras.

La masse molaire de l'acide gras polymérisé est supérieure à 350 g.mol⁻¹, de préférence supérieure à 500 g.mol⁻¹, et plus préférentiellement comprise entre 500 g.mol⁻¹ et 1000 g.mol⁻¹. De préférence, la masse molaire moyenne des acides gras polymérisés est comprise entre 500 g.mol⁻¹ et 800 g.mol⁻¹.

L'indice d'acidité de l'acide gras polymérisé est généralement supérieur à 160 mg KOH.g⁻¹, de préférence compris entre 160 mg KOH.g⁻¹ et 320 mg KOH.g⁻¹, de préférence encore compris entre 180 mg KOH.g⁻¹ et 300 mg KOH.g⁻¹, selon la norme ASTM D465 de 2005.

Selon un mode de réalisation préféré de l'invention, la composition comprend de 0,001% à 10% en poids d'acide gras polymérisé, plus préférentiellement de 0,005% à 5% en poids d'acide gras polymérisé, encore plus préférentiellement de 0,01% à 3% en poids d'acide gras polymérisé et encore plus préférentiellement de 0,02% à 1% en poids d'acide gras polymérisé par rapport au poids total de la composition aqueuse.

Le ratio massique entre la ou les amines et le ou les acides gras polymérisés est compris entre 90/10 et 10/90, préférentiellement entre 80/20 et 40/60, et plus préférentiellement entre 70/30 et 50/50.

La composition selon l'invention est une composition aqueuse. Elle comprend une teneur en eau strictement supérieure à 5% en poids par rapport au poids total de la composition aqueuse.

Elle est également acide. Par acide, au sens de la présente invention, on entend que le pH de la composition aqueuse est inférieur à 7, de préférence inférieur à 6, de préférence encore, il est compris entre 0,5 et 5, et plus particulièrement, il est compris entre 1 et 4. Il peut être ajusté par ajout d'un acide fort ou faible, organique ou minéral, à la composition. De préférence, le pH est ajusté par exemple par ajout des acides phosphoriques, de l'acide chlorhydrique ou de l'acide acétique.

La composition selon l'invention comprend éventuellement moins de 20% en poids, de préférence de 0 à 10%, plus préférentiellement de 0 à 5% en poids de bitume par rapport au poids total de la composition aqueuse. De manière préférée, la composition ne contient pas de bitume.

Selon un mode de réalisation préférée de l'invention, le complément à 100% en poids de la composition selon l'invention est constitué d'eau, éventuellement du ou des acides permettant d'ajuster le pH comme indiqué précédemment, et éventuellement d'un ou plusieurs additifs et/ou charges bien connus de l'homme du métier.

Parmi les additifs et/ou charges, on peut citer à titre non limitatif, les latex, les additifs rhéologiques (par exemple viscosifiant), colorants, conservateurs, anti-oxydants, tensio-actifs, charges minérales, électrolytes (sulfate d'aluminium, chlorure de calcium, par exemple), hydrotropes, et autres.

Selon un mode de réalisation préféré de l'invention, la composition selon l'invention est la phase aqueuse usuellement utilisée lors de la préparation d'émulsion bitumineuse.

### Procédé de préparation de la composition émulsifiante

La composition aqueuse selon l'invention peut être préparée par tout moyen bien connu de l'homme du métier par simple mélange des divers composants qui la constituent, et par exemple à une température généralement comprise entre la température ambiante et 60°C.

Dans un mode particulier de l'invention, le procédé comprend une étape d'ajout à une phase aqueuse d'une composition anhydre comprenant :
- au moins une amine telle que décrite ci-dessus, c'est-à-dire au moins une des amines de formule (I) et/ou de formule (II) et/ou de formule (IIIa) et/ou de formule (IIIb) et
- au moins un acide gras polymérisé tel que décrit ci-dessus.

La solution aqueuse, dans laquelle est ajoutée la composition anhydre, comprend de l'eau, éventuellement un ou plusieurs acides permettant d'ajuster le pH, et éventuellement un ou plusieurs additifs et/ou charges bien connus de l'homme du métier, comme indiqué précédemment. Cette solution peut être chauffée au préalable ou pendant le mélange avec la composition anhydre. Le pH de la composition finale peut également être ajusté par ajout d'acide(s).

Cette composition peut être très aisément préparée à partir d'une unité de production existante.

### Composition anhydre

L'invention vise également la composition anhydre décrite au paragraphe précédent, qui est mise en œuvre pour la préparation de la composition aqueuse acide émulsifiante.

Telle que définie ci-dessus, la composition anhydre comprend :
- au moins une amine telle que décrite ci-dessus, c'est-à-dire au moins une des amines de formule (I), de formule (II), de formule (IIIa), de formule (IIIb) et
- au moins un acide gras polymérisé tel que décrit ci-dessus.

Par anhydre, on entend au sens de la présente invention que la composition comporte une teneur en eau inférieure à 5% en poids du poids total de la composition, de préférence inférieure à 1% en poids. De préférence, la composition anhydre ne contient pas d'eau.

Selon un mode de réalisation préféré de l'invention, la composition anhydre comprend de 10% à 90% en poids d'amine, plus préférentiellement de 30% à 90% en poids d'amine, encore plus préférentiellement de 40% à 80% en poids d'amine et encore plus préférentiellement de 50% à 70% en poids d'amine tel que décrite ci-dessus par rapport au poids total de la composition anhydre.

Selon un mode de réalisation préféré de l'invention, la composition anhydre comprend de 10% à 90% en poids d'acide gras polymérisé, plus préférentiellement de 20% à 60% en poids d'acide gras polymérisé, encore plus préférentiellement de 30% à 50% en poids d'acide gras polymérisé par rapport au poids total de la composition anhydre.

Le ratio massique entre la ou les amines et le ou les acides gras polymérisés dans la composition anhydre est compris entre 90/10 et 10/90, préférentiellement entre 80/20 et 40/60, et plus préférentiellement entre 70/30 et 50/50.

Cette composition anhydre présente l'avantage d'être très simple à manipuler pour les préparateurs, et peut être également très facilement mélangée à la solution aqueuse.

### Utilisation de la composition anhydre

Comme décrit ci-dessus, l'invention a également pour objet l'utilisation de la composition anhydre telle que définie ci-dessus pour préparer la composition aqueuse acide émulsifiante selon l'invention.

L'invention a également pour objet l'utilisation de la composition anhydre telle que définie ci-dessus pour préparer une émulsion bitumineuse pour répandage.

### Procédé de préparation d'une émulsion bitumineuse

L'invention porte également sur le procédé de préparation d'une émulsion bitumineuse. Le procédé comprend au moins une étape de mélange d'un bitume et de la composition aqueuse acide émulsifiante selon l'invention.

L'avantage de ce procédé est qu'il est extrêmement simple et qu'il ne nécessite pas d'étapes supplémentaires préalables de traitement du bitume.

Avantageusement, ledit procédé de préparation de l'émulsion bitumineuse selon l'invention est effectué selon les méthodes bien connues de l'homme du métier, et par exemple telles que décrites dans le manuel « Les émulsions de bitume » édité par la Revue Générale des Routes et des Aérodromes (RGRA) (2006).

Selon un mode de réalisation préféré selon l'invention, le procédé consiste en une unique étape de mélange d'un bitume et de la composition aqueuse acide émulsifiante selon l'invention.

### Bitumes

Les bitumes utilisés dans la présente invention sont des bitumes issus de différentes origines. On peut citer tout d'abord les bitumes d'origine naturelle, ceux contenus dans des gisements de bitume naturel, d'asphalte naturel ou les sables bitumineux. Ces bitumes sont ceux décrits en introduction.

Les bitumes selon l'invention sont aussi les bitumes provenant du raffinage du pétrole brut. Les bitumes proviennent de la distillation atmosphérique et/ou sous vide du pétrole. Ces bitumes peuvent être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Les bitumes utilisés peuvent également être des bitumes fluxés par addition de solvants volatils, de fluxants d'origine pétrolière, de fluxants carbochimiques et/ou de fluxants d'origine végétale.

Les bitumes modifiés par des polymères peuvent également être utilisés. Comme polymère, on peut citer par exemple, et de manière indicative et non limitative, les élastomères thermoplastiques comme les copolymères statistiques ou séquences de styrène et de butadiène, linéaire ou en étoile (SBR, SBS) ou de styrène et d'isoprène (SIS), éventuellement réticulés, les copolymères d'éthylène et d'acétate de vinyle, les homopolymères et copolymères oléfiniques d'éthylène (ou propylène, ou butylène), les polyisobutylènes, les polybutadiènes, les polyisoprènes, les poly(chlorure de vinyle), les poudrettes de caoutchouc ou encore tout polymère utilisé pour la modification des bitumes ainsi que leurs mélanges. On utilise en général une quantité de polymère de 2% à 10% en poids par rapport au poids de bitume.

On peut aussi utiliser des bitumes synthétiques également appelés bitumes clairs, pigmentables ou colorables. Ces bitumes contiennent peu ou pas d'asphaltènes et peuvent être par conséquent colorés. Ces bitumes synthétiques sont à base de résine de pétrole et/ou de résine indène-coumarone et d'huile lubrifiante comme décrit par exemple dans le brevet EP179510.

Avantageusement, le bitume est un bitume de pénétrabilité mesurée selon la norme NF EN 1426 de Juin 2007 allant de 10 à 300, préférentiellement de 20 à 220, plus préférentiellement de 50 à 220. De préférence, le bitume selon l'invention est choisi parmi les bitumes de raffinage de pétrole brut non modifiés.

### Utilisation de la composition selon l'invention

L'invention porte enfin sur l'utilisation de la composition aqueuse acide émulsifiante selon l'invention pour préparer une émulsion bitumineuse pour répandage.

L'invention est illustrée par les exemples suivants nullement limitatifs.

### EXEMPLES

### Exemple 1

### 1. Préparation d'une composition anhydre

Afin de préparer 1 kg d'une composition anhydre selon l'invention, sont introduits dans un ballon 670 g de Dinoram® S (diamine de suif de n°CAS 61791-55-7 commercialisé par la société ARKEMA) et préalablement fondu à 60°C. La diamine amine est agitée sous atmosphère inerte et on ajoute 330 g de Pripol® 1017 (acide gras dimère commercialisé par la société CRODA). On note une montée en viscosité quand on arrive à environ 70% de la coulée. On maintient ensuite à 70°C pendant une heure. On vidange en flacon après prélèvement des échantillons pour analyse. Le produit est un solide cireux à froid qui présente un point de fusion aux alentours de 25°C.

### 2. Préparation de compositions aqueuses

Afin de préparer 1 kg d'une composition anhydre selon l'invention, on introduit dans un ballon 670 g de Dinoram® S (diamine de suif de n°CAS 61791-55-7 commercialisé par la société ARKEMA) préalablement fondu à 60°C. La diamine amine est agitée sous atmosphère inerte et on ajoute 330 g de Pripol® 1017 (acide gras dimère commercialisé par la société CRODA). On note une montée en viscosité quand on arrive à environ 70% de la coulée. On maintient ensuite à 70°C pendant une heure. On vidange en flacon après prélèvement des échantillons pour analyse. Le produit est un solide cireux à froid qui présente un point de fusion aux alentours de 25°C.

Des compositions aqueuses sont préparées en mélangeant la quantité d'émulsifiant comme indiqué dans le Tableau 1 ci-dessous, avec de l'eau chauffée à 45°C. Le pH des phases aqueuses est ajusté à 2 par addition d'acide chlorhydrique à 32%.

Les compositions A1 à A3 sont des compositions aqueuses comparatives, tandis que les compositions A4 et A5 sont des compositions aqueuses selon l'invention. Les teneurs sont exprimées en grammes.

**-- Tableau 1 --**

| | ***A1*** | ***A2*** | ***A3*** | ***A4*** | ***A5*** |
|---|---|---|---|---|---|
| Amine (1) | 2,3 | 2,3 | 2,3 | 2,3 | - |
| Composition anhydre selon §1 Ex1 | - | - | - | - | 3,45 |
| Acide caprique | - | 1,15 | - | - | - |
| Acide oléique | - | - | 1,15 | - | - |
| Acide gras (2) | - | - | - | 1,15 | - |
| Acide Chlorhydrique | 2,1 | 2,3 | 1,9 | 1,9 | 1,9 |
| Eau (q.s.p.) | 100 | 100 | 100 | 100 | 100 |

| | | | | | |
|---|---|---|---|---|---|
| (1) Le Dinoram® S commercialisé par la société ARKEMA est une diamine de suif de n°CAS 61791-55-7. (2) L'acide gras polymérisé Pripol® 1017 comprend, selon la fiche technique du fournisseur CRODA, environ 2% en poids de monomère d'acide gras, 78% en poids de dimère d'acide gras et 20% en poids de trimère d'acide gras. | | | | | |

### 3. Préparation des émulsions bitumineuses

Les émulsions de bitume ont été obtenues avec un moulin de la marque RINK ELEKTRO. La teneur massique en bitume est de 60%. Le bitume utilisé est un bitume paraffinique de pénétrabilité 70/100 fourni par la société Total et provenant de la raffinerie de Feyzin, France. La température du bitume lors de l'émulsification est de 140°C.

Pour préparer les émulsions, la phase aqueuse est introduite dans l'entonnoir du moulin avant sa mise en route. La phase aqueuse est mise en recirculation dans le moulin et la quantité de bitume nécessaire à obtenir la concentration voulue en bitume est alors ajoutée progressivement dans la phase aqueuse en recirculation. Le temps total d'introduction du bitume est d'environ 1 minute. Le circuit est alors vidangé et l'émulsion récupérée pour analyse.

Dans le tableau 2 ci-dessous, figurent les teneurs des composants des émulsions bitumineuses.

**-- Tableau 2 --**

| | ***B1*** | ***B2*** | ***B3*** | ***B4*** | ***B5*** |
|---|---|---|---|---|---|
| Phase aqueuse A1 | 400 | - | - | - | - |
| Phase aqueuse A2 | - | 400 | - | - | - |
| Phase aqueuse A3 | - | - | 400 | - | - |
| Phase aqueuse A4 | - | - | - | 400 | - |
| Phase aqueuse A5 | - | - | - | - | 400 |
| Bitume | 600 | 600 | 600 | 600 | 600 |

### 4. Évaluation des émulsions bitumineuses

Les émulsions sont ensuite analysées pour déterminer leur qualité et leurs propriétés applicatives.

La qualité de l'émulsion est jugée par le résidu sur tamis à 0,5 mm après fabrication (mesuré selon la norme NF EN 1429 de Décembre 1999) et l'analyse granulométrique réalisée à l'aide d'un granulomètre Mastersizer 3000 de la société Malvern.

Le granulomètre est paramétré de la façon suivante :
- indice de réfraction à 1,625 pour le bitume avec une partie imaginaire à 0,002 et
- indice de réfraction de 1,33 pour l'eau.

La valeur donnée dans le tableau 3 comme diamètre médian de l'émulsion correspond à la valeur Dv (0,5) donnée par l'appareil, c'est-à-dire la valeur maximum du diamètre des particules de bitume dispersées représentant 50% du volume de l'émulsion. Indice de rupture

La qualité de la déstabilisation après application est jugée grâce à l'indice de rupture mesuré avec du filler Sikaïsol selon le mode opératoire décrit dans la norme NF EN 13075-1 (septembre 2002).

Plus cet indice est bas et plus l'émulsion aura tendance à se déstabiliser rapidement après application, conduisant à un mûrissement et une réouverture au trafic rapide.

**-- Tableau 3 --**

| | ***B1*** | ***B2*** | ***B3*** | ***B4*** | ***B5*** |
|---|---|---|---|---|---|
| Retenue au tamis 0,5 mm (% poids) | < 0,1 | < 0,1 | < 0,1 | < 0,1 | < 0,1 |
| Dv (0,5) µm | 5,3 | 5,0 | 6,0 | 5,3 | 5,2 |
| Indice de rupture | 120 ± 5 | 123 ± 5 | 118 ± 5 | 90 ± 5 | 89 ± 5 |

On peut voir sur ces résultats que l'ajout d'acide gras à dosage d'amine constant ne perturbe pas la qualité de l'émulsion (à l'exception peut-être de l'acide oléique qui dégrade légèrement le diamètre médian) mais que seul l'acide gras polymérisé Pripol 1017® a un impact significatif sur l'indice de rupture, indiquant une déstabilisation plus rapide dans des conditions d'application.

### Exemple 2 :

### 1. Préparation des compositions

Des compositions aqueuses sont préparées en mélangeant la quantité d'émulsifiant comme indiqué dans le Tableau 4 ci-dessous, avec de l'eau chauffée à 45°C. Le pH de ces phases aqueuses est ajusté à 2 par addition d'acide chlorhydrique à 32%.

La composition A6 est une composition comparative, tandis que la composition A7 est une composition selon l'invention. Les teneurs sont exprimées en grammes.

**-- Tableau 4 --**

| | ***A6*** | ***A7*** |
|---|---|---|
| Amine (1) | 2,3 | 2,3 |
| Acide gras (2) | - | 1,15 |
| Acide chlorhydrique | 2,7 | 2,7 |
| Eau (q.s.p.) | 100 | 100 |

| | | |
|---|---|---|
| (1) Le Dinoram® S (commercialisé par la société ARKEMA) est une diamine de suif de n° CAS 61791-55-7. (2) L'acide gras polymérisé Pripol® 1017 comprend, selon la fiche technique du fournisseur CRODA, environ 2% en poids de monomère d'acide gras, 78% en poids de dimère d'acide gras et 20% en poids de trimère d'acide gras. | | |

### 2. Préparation des émulsions bitumineuses

Trois émulsions bitumineuses sont fabriquées avec un pilote d'émulsification de marque Emulbitume® équipé d'un moulin colloïdal de type Atomix C. Les émulsions bitumineuses contiennent 60% en poids de bitume, de pénétrabilité 70/100, provenant de la raffinerie Total de Feyzin, par rapport au poids total de l'émulsion. L'émulsification est réalisée de façon standard en continu au débit de 60 litres.h⁻¹. Le mélange bitume/phase aqueuse au ratio massique (60/40) est introduit dans l'Atomix C au moyen de deux circuits séparés alimentés par deux pompes. La température du bitume lors de l'émulsification est de 140°C.

Pour l'émulsion B8, la phase aqueuse utilisée est la phase aqueuse A6. L'acide gras est introduit dans le bitume, à chaud et sous agitation (Rayneri) avec un temps d'homogénéisation de 15 mn, selon l'enseignement du document EP0416682 de SHELL Internationale Research Maatschappij.

Dans le tableau 5 ci-dessous, figurent les teneurs des composants des émulsions bitumineuses.

**-- Tableau 5 --**

| | ***B6*** | ***B7*** | ***B8*** |
|---|---|---|---|
| Phase aqueuse A6 | 400 | - | 400 |
| Phase aqueuse A7 | - | 400 | - |
| Acide gras (3) | - | - | 1,15 |
| Bitume | 600 | 600 | 600 |

| | | | |
|---|---|---|---|
| (3) L'acide gras polymérisé Pripol® 1017 comprend, selon la fiche technique du fournisseur CRODA, environ 2% en poids de monomère d'acide gras, 78% en poids de dimère d'acide gras et 20% en poids de trimère d'acide gras. | | | |

### 3. Évaluation des émulsions bitumineuses

Les émulsions sont ensuite analysées pour déterminer leur qualité et leurs propriétés applicatives.

La qualité de l'émulsion est jugée par le résidu sur tamis à 0,5 mm après fabrication (mesuré selon la norme NF EN 1429 de Décembre 1999) et l'analyse granulométrique réalisée à l'aide d'un granulomètre Mastersizer 3000 de la société Malvern.

Le granulomètre est paramétré de la façon suivante :
- indice de réfraction à 1,625 pour le bitume avec une partie imaginaire à 0,002 et
- indice de réfraction de 1,33 pour l'eau.

La valeur donnée dans le tableau 6 comme diamètre médian de l'émulsion correspond à la valeur Dv (0,5) donnée par l'appareil, c'est à dire la valeur maximum du diamètre des particules de bitume dispersées représentant 50% du volume de l'émulsion.

### Indice de rupture

La qualité de la déstabilisation après application est jugée grâce à l'indice de rupture mesuré avec du filler Sikaïsol selon le mode opératoire décrit dans la norme NF EN 13075-1 (septembre 2002).

Plus cet indice est bas et plus l'émulsion aura tendance à se déstabiliser rapidement après application, conduisant à un mûrissement et une réouverture au trafic rapide.

**-- Tableau 6 --**

| | B6 | B7 | B8 |
|---|---|---|---|
| Retenue au tamis 0.5 mm (% poids) | < 0,1 | < 0,1 | < 0,1 |
| Dv (0,5) µm | 3,8 | 4,1 | 3,9 |
| Indice de rupture | 128 ± 5 | 102 ± 5 | 118 ± 5 |

Ces résultats montrent que la combinaison d'acide gras et d'amine au sein d'une phase aqueuse a un impact significatif sur l'indice de rupture.

La comparaison des résultats des émulsions B7 et B8 montrent, que lorsque l'acide est introduit dans la phase aqueuse (émulsion B7), et non dans le bitume (émulsion B8) comme enseigné par l'art antérieur, une déstabilisation encore plus rapide est obtenue.

Ces deux exemples montrent que le choix des amine(s) et acide(s) gras polymérisé(s), ainsi que de leur mode d'introduction dans l'émulsion bitumineuse sont critiques pour l'obtention d'une émulsion de bonne qualité et conduisant à une déstabilisation rapide dans les conditions d'application.

## Revendications

1. Composition aqueuse acide émulsifiante comprenant :
**A)** de 0.01 à 20% en poids par rapport au poids total de la composition aqueuse d'au moins une amine choisie parmi les amines de formules suivantes :
**i)** une monoamine grasse, éventuellement alcoxylée de formule (I) suivante : 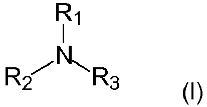 dans laquelle :
• R₁ représente une chaîne carbonée, saturée ou insaturée, linéaire ou ramifiée, comportant 8 à 24 atomes de carbone, préférentiellement 12 à 24 atomes de carbone et encore plus préférentiellement 12 à 18 atomes de carbone,
• R₂ et R₃, identiques ou différents, représentent l'atome d'hydrogène, un radical alkyle, linéaire ou ramifié, saturé ou insaturé, comportant 1 à 4 atomes de carbone, ou un groupe -(CH₂CHR₄O)ₕH, avec R₄ représentant un atome d'hydrogène, un radical méthyle ou éthyle, et h étant un nombre entier allant de 1 à 10, préférentiellement de 1 à 3 et encore plus préférentiellement de 1 à 2 ; étant entendu que si h > 1, il existe plusieurs groupes R₄ qui peuvent être identiques ou différents,
**ii)** une polyamine grasse, éventuellement alcoxylée de formule (II) suivante : 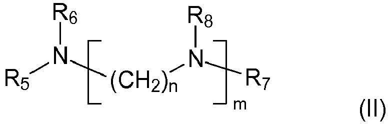 dans laquelle :
• R₅ représente une chaîne carbonée, saturée ou insaturée, linéaire ou ramifiée, comportant 8 à 24 atomes de carbone, préférentiellement 12 à 24 atomes de carbone et encore plus préférentiellement 12 à 18 atomes de carbone,
• R₆, R₇ et R₈, identiques ou différents, représentent l'atome d'hydrogène, un radical alkyle, linéaire ou ramifié, saturé ou insaturé, comportant 1 à 4 atomes de carbone, ou un groupe -(CH₂CHR₉O)ᵢH, avec
• Rg représentant un atome d'hydrogène, un radical méthyle ou éthyle, et
• i désignant un nombre entier allant de 1 à 10, préférentiellement de 1 à 3 et encore plus préférentiellement de 1 à 2 ;
• étant entendu que si i > 1, il existe plusieurs groupes Rg tels que définis précédemment et qui peuvent être identiques ou différents
• m désigne un nombre entier entre 1 et 6, préférentiellement entre 1 et 4 et plus préférentiellement 1 ou 2, il est entendu que si m > 1, il existe plusieurs groupes R₈ tels que définis précédemment et qui peuvent être identiques ou différents,
• n désigne un nombre entier entre 1 et 6, préférentiellement entre 2 et 4 et encore plus préférentiellement 2 ou 3,
**iii)** une amidoamine grasse, éventuellement alcoxylée, de formule (IIIa) suivante ou son équivalent cyclisé, éventuellement alcoxylé, de formule (IIIb) suivante : 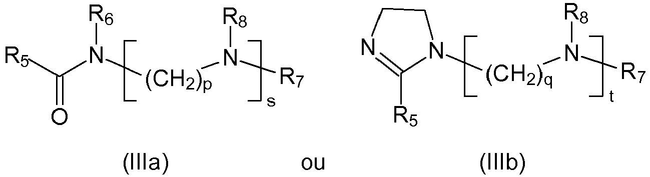 dans lesquelles :
• les groupes R₅, R₆, R₇ et R₈ ont la même signification que dans la formule (II),
• p et q désignent un nombre entier entre 1 et 6, préférentiellement entre 1 et 4 et plus préférentiellement 2,
• s désigne un nombre entier entre 1 et 10, préférentiellement entre 1 et 4 et encore plus préférentiellement 1, 2 ou 3,
• t désigne un nombre entier entre 0 et 9, préférentiellement entre 0 et 3 et encore plus préférentiellement 0, 1 ou 2,
• étant entendu que si s > 1 ou t > 1, il existe plusieurs groupes R₈ définis ci-dessus et qui peuvent être identiques ou différents,
**B)** de 0,001 % à 10% en poids par rapport au poids total de la composition aqueuse d'au moins un acide gras polymérisé présentant une masse molaire supérieure à 350 g.mol⁻¹ et un indice d'acidité supérieur à 160 mg KOH g⁻¹, selon la norme ASTM D465 de 2005,
**C)** moins de 20% en poids par rapport au poids total de la composition aqueuse d'au moins un bitume et
**D)** une teneur en eau strictement supérieure à 5% en poids par rapport au poids total de la composition aqueuse.

2. Composition aqueuse selon la revendication 1, **caractérisée en ce que** les amines sont choisies parmi l'octylamine, la nonylamine, la décylamine, la undécylamine, la dodécylamine, la tétradécylamine, l'hexadécylamine, l'octadécylamine, la myristoléylamine, la palmitoléylamine, l'oléylamine ; les amines grasses de coco, de palme, d'oléine ou de suif, la myristyl diméthylamine, la lauryl diméthyl amine, l'oléyl diméthylamine, la stéaryl diméthylamine, la diméthylamine de suif, la diméthylamine de coco, la diméthylamine de palme ; les dérivés diéthylés ou dipropylés correspondants, les amines grasses éthoxylées de suif, de coco, de palme, d'oléine ainsi que les dérivés propoxylés et butoxylés ; la N-coco-propylène diamine, N-stéaryl propylène diamine, la N-oléyl propylène diamine, la N-suif propylène diamine, la N-soja propylène diamine, la N-coco dipropylène triamine, la N-oléyl dipropylène triamine, la N-suif propylène triamine et la N-suif tripropylènetétramine ; la N,N,N'-triméthyl-N'-suif propylène diamine ainsi que les dérivés diéthylés ou dipropylés correspondants ; les polyamines grasses éthoxylées de suif, de coco, de palme, d'oléine ainsi que les dérivés propoxylés et butoxylés ; et leurs mélanges ; la diméthylaminopropylamine (DMAPA) ou la diméthylaminopropyl aminopropylamine (DMAPAPA) et leurs mélanges.

3. Composition aqueuse selon la revendication 1 ou 2, **caractérisée en ce que** l'*acide* gras polymérisé est obtenu par polymérisation d'au moins un acide gras insaturé choisi parmi l'acide crotonique (C4), l'acide iso-crotonique (C4), l'acide undécylénique (C11), l'acide hypogéïque (C16), l'acide palmitoléïque (C16), l'acide oléique (C18), l'acide élaïdique (C18), l'acide vaccénique (C18), l'acide pétrosélinique (C18), l'acide gadoléique (C20), l'acide gondoïque (C20), l'acide cétoléique (C22), l'acide érucidique (C22), l'acide brassidique (C22), l'acide nervonique (C24), l'acide tiglique (C5), l'acide sorbique (C6), l'acide linoléique (C18), l'acide hiragonique (C16), l'acide linolénique (C18), l'acide γ-linolénique (C18), l'acide eléostéarique (C18), l'acide parinarique (C18), homo-γ-linolénique (C20), l'acide arachidonique (C20), l'acide clupanodonique (C22) pris seuls ou en mélanges.

4. Composition aqueuse selon l'une quelconque des revendications précédentes, **caractérisée en ce que** l'indice d'acidité de l'acide gras polymérisé est compris entre 160 mg KOH.g⁻¹ et 320 mg KOH.g⁻¹, de préférence encore compris entre 180 mg KOH.g⁻¹ et 300 mg KOH.g⁻¹, selon la norme ASTM D465 de 2005.

5. Composition aqueuse selon l'une quelconque des revendications précédentes, **caractérisée en ce que** la composition comprend de 0,05% à 10% en poids d'au moins une amine de formule (I), et/ou (II) et/ou (IIIa) et/ou (IIIb) définie ci-dessus, plus préférentiellement de 0,1% à 3% en poids et encore plus préférentiellement de 0,2% à 1% en poids par rapport au poids total de la composition aqueuse.

6. Composition aqueuse selon l'une quelconque des revendications précédentes, **caractérisée en ce qu'**elle comprend de 0,005% à 5% en poids d'acide gras polymérisé, plus préférentiellement de 0,01% à 3% en poids d'acide gras polymérisé et encore plus préférentiellement de 0,02% à 1% en poids d'acide gras polymérisé par rapport au poids total de la composition aqueuse.

7. Composition aqueuse selon l'une quelconque des revendications précédentes, **caractérisée en ce que** le ratio massique entre la ou les amines et le ou les acides gras polymérisés est compris entre 90/10 et 10/90, préférentiellement entre 80/20 et 40/60, et plus préférentiellement entre 70/30 et 50/50.

8. Composition aqueuse selon l'une quelconque des revendications précédentes, **caractérisée en ce que** son pH va de 0,5 à 5, de préférence de 1 à 4.

9. Procédé de préparation d'au moins une émulsion bitumineuse comprenant au moins une étape de mélange d'au moins une composition telle que définie à l'une quelconque des revendications 1 à 8 et d'un bitume.

10. Composition anhydre comprenant :
- au moins une amine telle que définie en revendications 1 et 2, et
- au moins un acide gras polymérisé tel que défini en revendications 1, 3 et 4.

11. Composition anhydre selon la revendication 10, **caractérisée en ce qu'**elle comprend de 10% à 90% en poids d'amine, plus préférentiellement de 30% à 90% en poids d'amine, encore plus préférentiellement de 40% à 80% en poids d'amine et encore plus préférentiellement de 50% à 70% en poids d'amine par rapport au poids total de la composition anhydre.

12. Composition anhydre selon la revendication 10 ou 11, **caractérisée en ce qu'**elle comprend de 10% à 90% en poids d'acide gras polymérisé, plus préférentiellement de 20% à 60% en poids d'acide gras polymérisé, encore plus préférentiellement de 30% à 50% en poids d'acide gras polymérisé par rapport au poids total de la composition anhydre.

13. Composition anhydre selon l'une des revendications 10 à 12, **caractérisée en ce que** le ratio massique entre la ou les amines et le ou les acides gras polymérisés dans la composition anhydre est compris entre 90/10 et 10/90, préférentiellement entre 80/20 et 40/60, et plus préférentiellement entre 70/30 et 50/50.

14. Procédé de préparation d'une émulsion aqueuse acide émulsifiante telle que définie à l'une quelconque des revendications 1 à 8 comprenant au moins une étape de mélange :
- d'au moins une composition telle que définie à l'une quelconque des revendications 10 à 13 et
- d'une phase aqueuse.

15. Utilisation de la composition aqueuse acide émulsifiante telle que définie à l'une quelconque des revendications 1 à 8 pour la préparation d'une émulsion bitumineuse de répandage.

16. Utilisation de la composition anhydre telle que définie à l'une quelconque des revendications 10 à 13 pour la préparation d'émulsions bitumineuses de répandage.

## Patentansprüche

1. Emulgierende saure wässrige Zusammensetzung, umfassend:
**A)** 0,01 bis 20 Gewichts-%, unter Bezugnahme auf das Gesamtgewicht der wässrigen Zusammensetzung, an mindestens einem Amin, das aus den Aminen mit den folgenden Formeln ausgewählt ist:
**i)** einem Monofettamin, das möglicherweise alkoxyliert ist, mit der folgenden Formel (I): 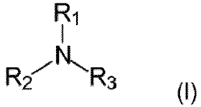 wobei:
• R₁ für eine unverzweigte oder verzweigte kohlenstoffhaltige Kette gesättigter oder ungesättigter Art steht, die 8 bis 24 Kohlenstoffatome, vorzugsweise 12 bis 24 Kohlenstoffatome und noch stärker bevorzugt 12 bis 18 Kohlenstoffatome aufweist,
• R₂ et R₃, die vollkommen gleichartig oder verschiedenartig sind, für ein Wasserstoffatom, einen geradkettigen oder verzweigten Alkylrest gesättigter oder ungesättigter Art, welcher 1 bis 4 Kohlenstoffatome aufweist, oder eine -(CH₂CHR₄O)ₕH-Gruppe stehen, wobei R₄ für ein Wasserstoffatom, einen Methyl- oder Ethylrest steht und h eine ganze Zahl im Bereich von 1 bis 10, vorzugsweise von 1 bis 3 und noch stärker bevorzugt von 1 bis 2 ist; wobei es sich versteht, dass im Falle von h > 1 mehrere R₄-Gruppen vorliegen, die vollkommen gleichartig oder verschiedenartig sein können,
**ii)** einem Polyfettamin, das möglicherweise alkoxyliert ist, mit der folgenden Formel (II): 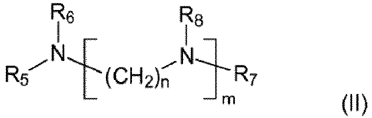 wobei:
• R₅ für eine unverzweigte oder verzweigte kohlenstoffhaltige Kette gesättigter oder ungesättigter Art steht, die 8 bis 24 Kohlenstoffatome, vorzugsweise 12 bis 24 Kohlenstoffatome und noch stärker bevorzugt 12 bis 18 Kohlenstoffatome aufweist,
• R₆, R₇ und R₈, die vollkommen gleichartig oder verschiedenartig sind, für ein Wasserstoffatom, einen geradkettigen oder verzweigten Alkylrest gesättigter oder ungesättigter Art, welcher 1 bis 4 Kohlenstoffatome aufweist, oder eine -(CH₂CHR₉O)ᵢH-Gruppe stehen, wobei
• R₉ für ein Wasserstoffatom, einen Methyl- oder Ethylrest steht, und
• i für eine ganze Zahl im Bereich von 1 bis 10, vorzugsweise von 1 bis 3 und noch stärker bevorzugt von 1 bis 2 steht;
• wobei es sich versteht, dass im Falle von i > 1 mehrere R9-Gruppen gemäß der vorstehenden Begriffsbestimmung vorliegen, wobei diese die vollkommen gleichartig oder verschiedenartig sein können
• m eine ganze Zahl zwischen 1 und 6, vorzugsweise zwischen 1 und 4 und stärker bevorzugt von 1 oder 2 bezeichnet, wobei es sich im Falle von m > 1 versteht, dass mehrere R₉-Gruppen gemäß der vorstehenden Begriffsbestimmung vorliegen, wobei diese die vollkommen gleichartig oder verschiedenartig sein können,
• n eine ganze Zahl zwischen 1 und 6, vorzugsweise zwischen 2 und 4 und noch stärker bevorzugt von 2 oder 3 bezeichnet,
**iii)** einem Amidofettamin, das möglicherweise alkoxyliert ist, nach der folgenden Formel (IIIa) oder dessen zyklisiertem Äquivalent, das möglicherweise alkoxyliert ist, nach der folgenden Formel (IIIb): 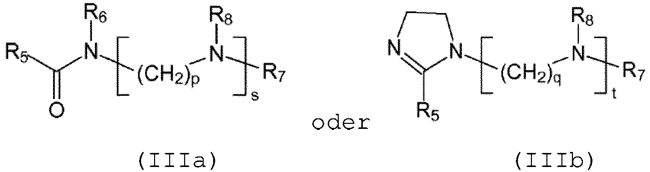 wobei:
• die Gruppen R₅, R₆, R₇ und R₈ dieselbe Bedeutung wie in der Formel (II) haben,
• p und q eine ganze Zahl zwischen 1 und 6, vorzugsweise zwischen 1 und 4 und stärker bevorzugt von 2 bezeichnen,
• s eine ganze Zahl zwischen 1 und 10, vorzugsweise zwischen 1 und 4 und noch stärker bevorzugt von 1, 2 oder 3 bezeichnet,
• t eine ganze Zahl zwischen 0 und 9, vorzugsweise zwischen 0 und 3 und noch stärker bevorzugt von 0, 1 oder 2 bezeichnet,
• wobei es sich versteht, dass im Falle von s > 1 oder t > 1 mehrere R₈-Gruppen gemäß der obigen Begriffsbestimmung vorliegen, wobei diese vollkommen gleichartig oder verschiedenartig sein können,
**B)** 0,001 % bis 10 % nach Gewicht, unter Bezugnahme auf das Gesamtgewicht der wässrigen Zusammensetzung, an mindestens einer polymerisierten Fettsäure, die eine Molmasse von mehr als 350 g.mo1⁻¹ und eine Säurezahl von mehr als 160 mg KOH g⁻¹, gemäß der Norm ASTM D465 von 2005, aufweist,
**C)** mindestens 20 Gewichts-%, unter Bezugnahme auf das Gesamtgewicht der wässrigen Zusammensetzung, an mindestens einem Bitumen, und
**D)** einen Wassergehalt, der streng höher als 5 Gewichts-% ist, unter Bezugnahme auf das Gesamtgewicht der wässrigen Zusammensetzung.

2. Wässrige Zusammensetzung nach Anspruch 1, **dadurch gekennzeichnet, dass** die Amine aus Octylamin, Nonylamin, Decylamin, Undecylamin, Dodecylamin, Tetradecylamin, Hexadecylamin, Octadecylamin, Myristoleylamin, Palmitoleylamin, Oleylamin; den Fettaminen von Kokosfett, von Palmfett, von Triolein oder von Talg, Myristyldimethylamin, Lauryldimethylamin, Oleyldimethylamin, Stearyldimethylamin, Dimethylamin von Talg, Dimethylamin von Kokosfett, Dimethylamin von Palmfett; den entsprechenden Diethyl- oder Dipropylderivaten, den ethoxylierten Fettaminen von Kokosfett, von Palmfett, von Triolein sowie den propoxylierten und butoxylierten Derivaten; N-Kokosfettpropylendiamin, N-Stearylpropylendiamin, N-Oleylpropylendiamin, N-Talg-Propylendiamin, N-Sojaölpropylendiamin, N-Kokosfett-dipropylentriamin, N-Oleyldipropylentriamin, N-Talg-Propylentriamin und N-Talg-tripropylentetramin; N,N,N'-Trimethyl-N'-Talg-propylendiamin sowie den entsprechenden Diethyl- oder Dipropylderivaten; den ethoxylierten Polyfettaminen von Kokosfett, von Palmfett, von Triolein sowie den propoxylierten und butoxylierten Derivaten; und deren Mischungen; Dimethylaminopropylamin (DMAPA) oder Dimethylaminopropylaminopropylamin (DMAPAPA) und deren Mischungen ausgewählt sind.

3. Wässrige Zusammensetzung nach Anspruch 1 oder 2, **dadurch gekennzeichnet, dass** die polymerisierte Fettsäure durch Polymerisation mindestens einer ungesättigten Fettsäure erhalten wird, die aus Crotonsäure (C4); Isocrotonsäure (C4), Undecylensäure (C11), Hypogeinsäure (C16), Palmitoleinsäure (C16), Ölsäure (C18), Elaidinsäure (C18), Vaccensäure (C18), Petroselinsäure (C18), Gadoleinsäure (C20), Gondosäure (C20), Cetoleinsäure (C22), Erucasäure (C22), Brassidinsäure (C22), Nervonsäure (C24), Tiglinsäure (C5), Sorbinsäure (C6), Linolsäure (C18), Hiragonsäure (C16), Linolensäure (C18), γ-Linolensäure (C18), Eleostearinsäure (C18), Parinarinsäure (C18), Homo-γ-linolensäure (C20), Arachidonsäure (C20), Clupanodonsäure (C22), jeweils für sich genommen oder in Mischungen, ausgewählt ist.

4. Wässrige Zusammensetzung nach einem der vorhergehenden Ansprüche, **dadurch gekennzeichnet, dass** die Säurezahl der polymerisierten Fettsäure im Bereich von 160 mg KOH.g⁻¹ bis 320 mg KOH.g⁻¹, weiter bevorzugt im Bereich von 180 mg KOH.g⁻¹ bis 300 mg KOH.g⁻¹ liegt, gemäß der Norm ASTM D465 von 2005.

5. Wässrige Zusammensetzung nach einem der vorhergehenden Ansprüche, **dadurch gekennzeichnet, dass** die Zusammensetzung 0,05 % bis 10 % nach Gewicht mindestens eines Amins der Formel (I) und/oder (II) und/oder (IIIa) und/oder (IIIb) gemäß der obigen Begriffsbestimmung, stärker bevorzugt 0,1 % bis 3 % nach Gewicht und noch stärker bevorzugt 0,2 % bis 1 % nach Gewicht umfasst, unter Bezugnahme auf das Gesamtgewicht der wässrigen Zusammensetzung.

6. Wässrige Zusammensetzung nach einem der vorhergehenden Ansprüche, **dadurch gekennzeichnet, dass** sie 0,005 % bis 5 % nach Gewicht an polymerisierter Fettsäure, stärker bevorzugt 0,01 % bis 3 % nach Gewicht an polymerisierter Fettsäure und noch stärker bevorzugt 0,02 % bis 1 % nach Gewicht an polymerisierter Fettsäure umfasst, unter Bezugnahme auf das Gesamtgewicht der wässrigen Zusammensetzung.

7. Wässrige Zusammensetzung nach einem beliebigen der vorhergehenden Ansprüche, **dadurch gekennzeichnet, dass** das Massenverhältnis zwischen dem oder den Aminen und der oder den polymerisierten Fettsäuren im Bereich von 90/10 bis 10/90, vorzugsweise von 80/20 bis 40/60 und stärker bevorzugt von 70/30 bis 50/50 liegt.

8. Wässrige Zusammensetzung nach einem beliebigen der vorhergehenden Ansprüche, **dadurch gekennzeichnet, dass** ihr pH-Wert im Bereich von 0,5 bis 5, vorzugsweise von 1 bis 4, liegt.

9. Verfahren zur Herstellung mindestens einer bituminösen Emulsion, das mindestens einen Schritt des Vermischens mindestens einer Zusammensetzung gemäß der Begriffsbestimmung in einem der Ansprüche 1 bis 8 und eines Bitumens umfasst.

10. Wasserfreie Zusammensetzung, umfassend:
- mindestens ein Amin gemäß der Begriffsbestimmung in Anspruch 1 und 2, und
- mindestens eine polymerisierte Fettsäure gemäß der Begriffsbestimmung in den Ansprüchen 1, 3 und 4.

11. Wasserfreie Zusammensetzung nach Anspruch 10, **dadurch gekennzeichnet, dass** sie 10 % bis 90 % nach Gewicht an Amin, stärker bevorzugt 30 % bis 90 % nach Gewicht an Amin, noch stärker bevorzugt 40 % bis 80 % nach Gewicht an Amin und noch stärker bevorzugt 50 % bis 70 % nach Gewicht an Amin umfasst, unter Bezugnahme auf das Gesamtgewicht der wasserfreien Zusammensetzung.

12. Wasserfreie Zusammensetzung nach Anspruch 10 oder 11, **dadurch gekennzeichnet, dass** sie 10 % bis 90 % nach Gewicht an polymerisierter Fettsäure, stärker bevorzugt 20 % bis 60 % nach Gewicht an polymerisierter Fettsäure, noch stärker bevorzugt 30 % bis 50 % nach Gewicht an polymerisierter Fettsäure umfasst, unter Bezugnahme auf das Gesamtgewicht der wasserfreien Zusammensetzung.

13. Wasserfreie Zusammensetzung nach einem der Ansprüche 10 bis 12, **dadurch gekennzeichnet, dass** das Massenverhältnis zwischen dem oder den Aminen und der oder den polymerisierten Fettsäuren im Bereich von 90/10 bis 10/90, vorzugsweise von 80/20 bis 40/60 und stärker bevorzugt von 70/30 bis 50/50 liegt.

14. Verfahren zur Herstellung einer emulgierenden sauren wässrigen Emulsion gemäß der Begriffsbestimmung in einem der Ansprüche 1 bis 8, wobei es mindestens einen Schritt umfasst, in welchem Folgendes vermischt wird:
- mindestens eine Zusammensetzung gemäß der Begriffsbestimmung in einem beliebigen der Ansprüche 10 bis 13, und
- eine wässrige Phase.

15. Verwendung der emulgierenden sauren wässrigen Zusammensetzung gemäß der Begriffsbestimmung in einem der Ansprüche 1 bis 8 zur Herstellung einer gießfähigen Bitumenemulsion.

16. Verwendung der wasserfreien Zusammensetzung gemäß der Begriffsbestimmung in einem der Ansprüche 10 bis 13 zur Herstellung von gießfähigen Bitumenemulsionen.

## Claims

1. Aqueous acidic emulsifying composition comprising:
A) from 0.01 to 20% by weight, relative to the total weight of the aqueous composition, of at least one amine chosen from the amines of following formulae:
i) an optionally alkoxylated fatty monoamine of following formula (I): 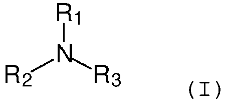 in which:
• R₁ represents a saturated or unsaturated, linear or branched carbon chain comprising 8 to 24 carbon atoms, preferentially 12 to 24 carbon atoms and even more preferentially 12 to 18 carbon atoms,
• R₂ and R₃, which are identical or different, represent a hydrogen atom, a linear or branched, saturated or unsaturated alkyl radical comprising 1 to 4 carbon atoms, or a - (CH₂CHR₄O)ₕH group, with R₄ representing a hydrogen atom, a methyl or ethyl radical, and h being an integer ranging from 1 to 10, preferentially from 1 to 3 and even more preferentially from 1 to 2, it being understood that if h > 1, there are several groups R₄ which may be identical or different,
ii) an optionally alkoxylated fatty polyamine of following formula (II): 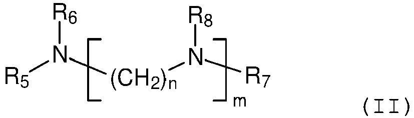 in which:
• R₅ represents a saturated or unsaturated, linear or branched carbon chain comprising 8 to 24 carbon atoms, preferentially 12 to 24 carbon atoms and even more preferentially 12 to 18 carbon atoms,
• R₆, R₇ and R₈, which are identical or different, represent a hydrogen atom, a linear or branched, saturated or unsaturated alkyl radical comprising 1 to 4 carbon atoms, or a -(CH₂CHR₉O)ᵢH group, with
• R₉ representing a hydrogen atom, a methyl or ethyl radical, and
• i denoting an integer ranging from 1 to 10, preferentially from 1 to 3 and even more preferentially from 1 to 2;
• it being understood that if i > 1 there are several groups R₉ as defined above and which may be identical or different
• m denotes an integer between 1 and 6, preferentially between 1 and 4 and more preferentially 1 or 2, it being understood that if m > 1 there are several groups R₈ as defined above and which may be identical or different,
• n denotes an integer between 1 and 6, preferentially between 2 and 4 and even more preferentially 2 or 3, iii) an optionally alkoxylated fatty amidoamine of following formula (IIIA) or the optionally alkoxylated cyclized equivalent thereof, of following formula (IIIb): 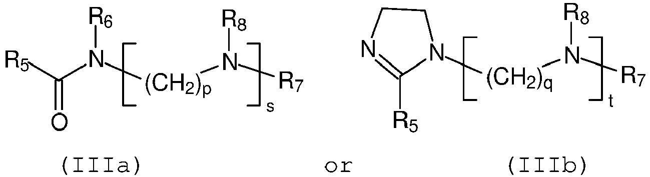 in which:
• the groups R₅, R₆, R₇ and R₈ have the same meaning as in the formula (II),
• p and q denote an integer between 1 and 6, preferentially between 1 and 4 and more preferentially 2,
• s denotes an integer between 1 and 10, preferentially between 1 and 4 and even more preferentially 1, 2 or 3,
• t denotes an integer between 0 and 9, preferentially between 0 and 3 and even more preferentially 0, 1 or 2,
• it being understood that if s > 1 or t > 1, there are several groups R₈ defined above and which may be identical or different,
B) from 0.001% to 10% by weight, relative to the total weight of the aqueous composition, of at least one polymerized fatty acid having a molar mass greater than 350 g.mol⁻¹ and an acid number greater than 160 mg KOH g⁻¹. according to standard ASTM D465 of 2005,
C) less than 20% by weight, relative to the total weight of the aqueous composition, of at least one bitumen, and
D) a water content strictly greater than 5% by weight relative to the total weight of the aqueous composition.

2. Aqueous composition according to Claim 1, **characterized in that** the amines are chosen from octylamine, nonylamine, decylamine, undecylamine, dodecylamine, tetradecylamine, hexadecylamine, octadecylamine, myristoleylamine, palmitoleylamine, oleylamine; fatty amines of coconut, palm, olein or tallow, myristyl dimethylamine, lauryl dimethylamine, oleyl dimethylamine, stearyl dimethylamine, tallow dimethylamine, coconut dimethylamine, palm dimethylamine; the corresponding diethylated or dipropylated derivatives, ethoxylated fatty amines of tallow, coconut, palm, olein, and also the propoxylated and butoxylated derivatives; N-coco-propylenediamine, N-stearyl propylenediamine, N-oleyl propylenediamine, N-tallow propylenediamine, N-soya propylenediamine, N-coco dipropylenetriamine, N-oleyl dipropylenetriamine, N-tallow propylenetriamine and N-tallow tripropylenetetramine; N,N,N'-trimethyl-N'-tallow propylenediamine and also the corresponding diethylated or dipropylated derivatives; ethoxylated fatty polyamines of tallow, coconut, palm, olein, and also the propoxylated and butoxylated derivatives; and mixtures thereof; dimethylaminopropylamine (DMAPA) or dimethylaminopropylaminopropylamine (DMAPAPA) and mixtures thereof.

3. Aqueous composition according to Claim 1 or 2, **characterized in that** the polymerized fatty acid is obtained by polymerization of at least one unsaturated fatty acid selected from crotonic acid (C4), isocrotonic acid (C4), undecylenic acid (C11), hypogeic acid (C16), palmitoleic acid (C16), oleic acid (C18), elaidic acid (C18), vaccenic acid (C18), petroselinic acid (C18), gadoleic acid (C20), gondoic acid (C20), cetoleic acid (C22), erucidic acid (C22), brassidic acid (C22), nervonic acid (C24), tiglic acid (C5), sorbic acid (C6), linoleic acid (C18), hiragonic acid (C16), linolenic acid (C18), γ-linolenic acid (C18), eleostearic acid (C18), parinaric acid (C18), homo-γ-linolenic acid (C20), arachidonic acid (C20), clupanodonic acid (C22), taken alone or as mixtures.

4. Aqueous composition according to any one of the preceding claims, **characterized in that** the acid number of the polymerized fatty acid is between 160 mg KOH.g⁻¹ and 320 mg KOH.g⁻¹, more preferably still between 180 mg KOH.g⁻¹ and 300 mg KOH.g⁻¹, according to standard ASTM D465 of 2005.

5. Aqueous composition according to any one of the preceding claims, **characterized in that** the composition comprises from 0.05% to 10% by weight of at least one amine of formula (I), and/or (II) and/or (IIIA) and/or (IIIb) defined above, more preferentially from 0.1% to 3% by weight and even more preferentially from 0.2% to 1% by weight relative to the total weight of the aqueous composition.

6. Aqueous composition according to any one of the preceding claims, **characterized in that** it comprises from 0.005% to 5% by weight of polymerized fatty acid, more preferentially from 0.01% to 3% by weight of polymerized fatty acid and even more preferentially from 0.02% to 1% by weight of polymerized fatty acid relative to the total weight of the aqueous composition.

7. Aqueous composition according to any one of the preceding claims, **characterized in that** the weight ratio between the amine(s) and the polymerized fatty acid(s) is between 90/10 and 10/90, preferentially between 80/20 and 40/60, and more preferentially between 70/30 and 50/50.

8. Aqueous composition according to any one of the preceding claims, **characterized in that** the pH thereof ranges from 0.5 to 5, preferably from 1 to 4.

9. Process for preparing at least one bituminous emulsion comprising at least one step of mixing at least one composition as defined in any one of Claims 1 to 8 with a bitumen.

10. Anhydrous composition comprising:
- at least one amine as defined in Claims 1 and 2, and
- at least one polymerized fatty acid as defined in Claims 1, 3 and 4.

11. Anhydrous composition according to Claim 10, **characterized in that** it comprises from 10% to 90% by weight of amine, more preferentially from 30% to 90% by weight of amine, even more preferentially from 40% to 80% by weight of amine and even more preferentially from 50% to 70% by weight of amine, relative to the total weight of the anhydrous composition.

12. Anhydrous composition according to Claim 10 or 11, **characterized in that** it comprises from 10% to 90% by weight of polymerized fatty acid, more preferentially from 20% to 60% by weight of polymerized fatty acid, even more preferentially from 30% to 50% by weight of polymerized fatty acid, relative to the total weight of the anhydrous composition.

13. Anhydrous composition according to one of Claims 10 to 12, **characterized in that** the weight ratio between the amine(s) and the polymerized fatty acid(s) in the anhydrous composition is between 90/10 and 10/90, preferentially between 80/20 and 40/60, and more preferentially between 70/30 and 50/50.

14. Process for preparing an aqueous acidic emulsifying emulsion as defined in any one of Claims 1 to 8, comprising at least one step of mixing:
- at least one composition as defined in any one of Claims 10 to 13 with
- an aqueous phase.

15. Use of the aqueous acidic emulsifying composition as defined in any one of Claims 1 to 8 for preparing a bituminous spreading emulsion.

16. Use of the anhydrous composition as defined in any one of Claims 10 to 13 for preparing bituminous spreading emulsions
